# EUROPEAN PATENT APPLICATION

(11) **EP 4 564 456 A1**
(43) Date of publication of application: **04.06.2025**
(21) Application number: 22964654.2
(22) Date of filing: 07.11.2022
(51) Int. Cl.: H01M 4/134, H01M 4/36, H01M 4/78

(54) **SECONDARY BATTERY, PREPARATION METHOD THEREFOR, AND ELECTRIC DEVICE**

(71) Applicant: Contemporary Amperex Technology (Hong Kong) Limited, Hong Kong (HK)
(72) Inventor: CHENG, Zhipeng, Ningde, Fujian 352100 (CN); DENG, Yaqian, Ningde, Fujian 352100 (CN); LV, Ruijing, Ningde, Fujian 352100 (CN); WANG, Yuzhen, Ningde, Fujian 352100 (CN); CHEN, Ning, Ningde, Fujian 352100 (CN); JIN, Haizu, Ningde, Fujian 352100 (CN); LI, Baiqing, Ningde, Fujian 352100 (CN)
(74) Representative: Gong, Jinping
(86) International application number: PCT/CN2022/130222
(87) International publication number: WO 2024/098175

(57) **Abstract**

A secondary battery, comprising a positive electrode plate, a negative electrode plate and a separator provided between the positive electrode plate and the negative electrode plate; wherein the negative electrode plate comprises a negative electrode current collector and a negative electrode active material layer provided on at least one surface of the negative electrode current collector, the negative electrode plate comprises one or more planar areas and one or more curved areas, the negative electrode active material layer of at least one of the planar areas comprises an active material A, and the negative electrode active material layer of at least one of the curved areas comprises an active material B, and the expansion rate of the active material B is greater than that of the active material A.

## Description

### Technical Field

The present application relates to the technical field of secondary batteries, and in particular to a secondary battery and a preparation method therefor, and a power consuming device.

### Background Art

The statements herein merely provide background information related to the present application and may not necessarily constitute prior art.

In normal cases, when a lithium-ion battery is charged, lithium ions are deintercalated from the positive electrode and then intercalated into the negative electrode. However, when some abnormal conditions occur, some lithium ions may not be intercalate into the negative electrode, and receive electrons on the surface of the negative electrode to form elemental lithium, which is the phenomenon of "lithium precipitation" often mentioned in the field of secondary batteries. Lithium precipitation will not only greatly shorten cycle life of the battery, but also limit the fast charging capacity of the battery, and may lead to serious consequences such as combustion and explosion. Therefore, how to avoid the phenomenon of "lithium precipitation" is one of the important topics in the research field of secondary batteries.

### Summary of the invention

According to various embodiments of the present application, provided are a secondary battery and a preparation method therefor, and a power consuming device.

A first aspect of the present application provides a secondary battery, comprising a positive electrode plate, a negative electrode plate and a separator provided between the positive electrode plate and the negative electrode plate;

wherein the negative electrode plate comprises a negative electrode current collector and a negative electrode active material layer provided on at least one surface of the negative electrode current collector, the negative electrode plate comprises one or more planar areas and one or more curved areas, the negative electrode active material layer of at least one of the planar areas comprises an active material A, and the negative electrode active material layer of at least one of the curved areas comprises an active material B, and the expansion rate of the active material B is greater than that of the active material A.

In the present application, different active materials are added to the planar areas and curved areas of the negative electrode plate of the battery, so that the negative electrode active material layer of at least one of the planar areas comprises an active material A, and the negative electrode active material layer of at least one of the curved areas comprises an active material B, and the expansion rate of the active material B is greater than that of the active material A. With the addition of the active material A and the active material B, the distance between the positive and negative electrode plates in the curved areas of the battery can be shortened after charging, which can effectively avoid the phenomenon that lithium ions tend to receive electrons on the surface of the negative electrode due to too long diffusion distance of lithium ions in the curved areas in the battery made by the traditional winding process, resulting in lithium precipitation and failure to be normally intercalated into the negative electrode active material.

**In** some embodiments, the active material B includes a silicon-based material; optionally, the silicon-based material includes one or more of elemental silicon, a silicon oxide compound, a silicon carbon composite, a silicon nitrogen composite, and a silicon alloy; and optionally, the silicon-based material includes one or more of a silicon oxide compound and a silicon carbon composite. The silicon-based material has the characteristic of large expansion during charging, which can effectively shorten the distance between the positive and negative electrode plates in the curved areas of the battery after charging, so that electrons can be better intercalated into the negative electrode active material, thereby avoiding lithium precipitation on the surface of the negative electrode.

In some embodiments, in the negative electrode active material layer located in the curved areas, the mass percentage content of the silicon-based material is 3% - 40%; and optionally, in the negative electrode active material layer located in the curved areas, the mass percentage content of the silicon-based material is 5% - 20%. By controlling the mass proportion of the silicon-based material in the active material layer in the curved areas within an appropriate range, and on the premise of effectively reducing the diffusion distance of lithium ions, it is possible to avoid the excessive expansion and extrusion of the electrode plates caused by the short distance between the positive and negative electrode plates, or the lithium precipitation caused by poor infiltration of electrolyte solution, and further slow down the lithium precipitation of the battery.

In some embodiments, the negative electrode active material layer comprising the active material B in the curved areas also comprises a carbon-based material; optionally, in the negative electrode active material layer located in the curved areas, the mass percentage content of the carbon-based material is 55% - 97%; and further optionally, in the negative electrode active material layer located in the curved areas, the mass percentage content of the carbon-based material is 75% - 90%. By setting the mass proportion of the carbon-based material in the active material layer in the curved areas within an appropriate range and compounding with an amount of the active material B, the expansion degree of the curved areas can be further controlled within an appropriate range, and the capacity, initial efficiency and cycling performance of the battery can be effectively balanced.

In some embodiments, the carbon-based material includes one or more of synthetic graphite, natural graphite, soft carbon and hard carbon; and optionally, the silicon-based material includes one or more of a silicon oxide compound and a silicon carbon composite.

In some embodiments, optionally, in a fully discharged state, the shortest distance between the negative electrode plate located in the curved areas and the adjacent positive electrode plate is 18 µm - 170 µm; and optionally, in a fully discharged state, the shortest distance between the negative electrode plate located in the curved areas and the adjacent positive electrode plate is 20 µm - 120 µm. By controlling the initial distance between the positive and negative electrode plates in the curved areas of the battery in a fully discharged state within an appropriate range, the distance between the electrode plates of the battery after charging can be within an appropriate range, and on the premise of reducing the diffusion distance of lithium ions, the excessive extrusion and poor infiltration of electrolyte solution caused by too short a distance between the positive and negative electrode plates.

In some embodiments, after the secondary battery is charged to 4.25 V at a current of 0.5 C, the shortest distance between the negative electrode plate located in the curved areas and the adjacent positive electrode plate is 15 µm - 62 µm; or after the secondary battery is charged to 4.25 V at a current of 1 C, the shortest distance between the negative electrode plate located in the curved areas and the adjacent positive electrode plate is 15 µm - 59 µm; or after the secondary battery is charged to 4.25 V at a current of 2 C, the shortest distance between the negative electrode plate located in the curved areas and the adjacent positive electrode plate is 15 µm - 54 µm; or after the secondary battery is charged to 4.25 V at a current of 3 C, the shortest distance between the negative electrode plate located in the curved areas and the adjacent positive electrode plate is 15 µm - 45 µm; or after the secondary battery is charged to 4.25 V at a current of 4 C, the shortest distance between the negative electrode plate located in the curved areas and the adjacent positive electrode plate is 15 µm - 33 µm. After charging under more conventional charging conditions, by controlling the distance between the positive and negative electrode plates within an appropriate range, the occurrence of lithium precipitation can be further slowed down.

In some embodiments, the active material A comprises a silicon-based material, and the mass percentage content of the silicon-based material in the negative electrode active material layer located in the curved areas is greater than that in the negative electrode active material layer located in the planar areas.

In some embodiments, on the surface of the negative electrode current collector, the negative electrode active material layer has an areal density of 80 mg/1540.25 mm² - 190 mg/1540.25 mm²; and optionally, on the surface of the negative electrode current collector, the negative electrode active material layer has an areal density of 115 mg/1540.25 mm² - 160 mg/1540.25 mm². By controlling the areal density of the active material layer within an appropriate range, the energy density and kinetic performance of the battery can be effectively balanced on the premise of slowing down lithium precipitation.

In some embodiments, the negative electrode active material layer has a thickness of 65 µm - 140 µm; and optionally, the negative electrode active material layer has a thickness of 90 µm - 110 µm. By controlling the thickness of the negative electrode active material layer within an appropriate range, it can better match the distance between the positive and negative electrode plates set in the foregoing embodiments, so that lithium ions can be intercalated into the negative electrode active material timely, and the occurrence of lithium precipitation is further slowed down.

In some embodiments, the negative electrode plate has a thickness of 70 µm - 145 µm; and optionally, the negative electrode plate has a thickness of 95 µm - 115 µm. By controlling the thickness of the negative electrode plate within an appropriate range, the battery is allowed to have more suitable mechanical strength and better match the conventional processing technology, so that it is easy to control the distance between the positive and negative electrode plates within the range set in the foregoing embodiments, and further slow down the occurrence of lithium precipitation.

A second aspect of the present application provides a method for preparing the secondary battery of one or more of the foregoing embodiments, comprising the steps of:
determining the planar areas and the curved areas of a negative electrode plate according to a winding process, coating a negative electrode slurry containing an active material B on the surface of a negative electrode current collector corresponding to at least one of the curved areas, drying and pressing same to obtain a negative electrode plate;
coating a positive electrode slurry on the surface of a positive electrode current collector, drying and pressing same to obtain a positive electrode plate; and
winding the negative electrode plate, the positive electrode plate and a separator according to a preset winding process.

In some embodiments, the negative electrode slurry containing the active material B has a solid content of 42% - 60%; and optionally, the negative electrode slurry containing the active material B has a solid content of 44% - 56%. By controlling the solid content of the negative electrode slurry within an appropriate range, it is beneficial to obtain a more uniform coating of the negative electrode active material layer, so that the distribution of the silicon-based material in the curved areas is more uniform, and the occurrence of lithium precipitation can be better slowed down.

A third aspect of the present application provides a power consuming device, comprising the secondary battery of one or more of the foregoing embodiments.

Details of one or more embodiments of the present application will be provided in the following accompanying drawings and description. Other features, objectives and advantages of the present application will become obvious from the description, accompanying drawings and claims.

### Brief Description of the Drawings

In order to better describe and illustrate embodiments or examples of those inventions disclosed herein, reference may be made to one or more of the accompanying drawings. Additional details or examples used to describe the accompanying drawings should not be considered as limitations on the scope of any of the disclosed inventions, the presently described embodiments or examples, and the best mode of these inventions currently understood.
Fig. 1 shows a schematic diagram of a secondary battery according to an embodiment of the present application.
Fig. 2 shows an exploded view of the secondary battery according to an embodiment of the present application as shown in Fig. 1.
FIG. 3 shows a schematic diagram of a power consuming device using a secondary battery according to an embodiment of the present application as a power source.

List of reference signs:
1: secondary battery; 11: housing; 12: electrode assembly; 13: cover plate; 2: power consuming device.

Fig. 4 shows a schematic diagram of a cross-section of a secondary battery according to an embodiment of the present application.

### Detailed Description of Embodiments

In order to make the objective, technical solutions, and advantages of the present application clearer, the present application is further described in detail below with reference to the accompanying drawings and the embodiments. It should be understood that the specific embodiments described herein are merely used to explain the present application and are not intended to limit the present application.

Unless otherwise defined, all technical and scientific terms used herein have the same meanings as those commonly understood by those skilled in the art to which the present application belongs. The terms used in the description of the present application are merely for the purpose of describing specific embodiments, and are not intended to limit the present application. As used herein, the term "and/or" includes any and all combinations of one or more of the associated listed items.

The problem of lithium precipitation is a bad phenomenon that often occurs during the use of secondary batteries. Lithium precipitation is often caused by two situations: (1) the insufficient N/P ratio of the battery (the ratio of the reversible surface capacity of the negative electrode to the reversible surface capacity of the positive electrode in the same stage and under the same operating conditions); and (2) poor infiltration of the electrolyte solution. For the above known situation, there have been a lot of researches to improve it, such as adjusting the N/P ratio and improving the infiltration ability of the electrolyte solution. However, the phenomenon of lithium precipitation still exists.

In order to solve this problem, the inventors of the present application finds through a large amount of research, summary and analysis that: at present, most of the secondary batteries are prepared by the winding process. However, in the curved areas at the corner of the secondary battery prepared by the current winding process, the distance between the positive and negative electrode plates can not be effectively reduced through the pressing process like in the planar areas. Therefore, the curved areas are prone to cause long diffusion distance and serious polarization of lithium ions due to the large distance between the positive and negative electrode plates, the lithium ions can not be intercalated into the negative electrode active material timely and get electrons on the surface of the negative electrode active material to become elemental lithium and precipitate.

Based on the above research results, a first aspect of the present application provides a secondary battery, comprising a positive electrode plate, a negative electrode plate and a separator provided between the positive electrode plate and the negative electrode plate;

wherein the negative electrode plate comprises a negative electrode current collector and a negative electrode active material layer provided on at least one surface of the negative electrode current collector, the negative electrode plate comprises one or more planar areas and one or more curved areas, the negative electrode active material layer of at least one of the planar area comprises an active material A, and the negative electrode active material layer of at least one of the curved area comprises an active material B, and the expansion rate of the active material B is greater than that of the active material A.

In the present application, different active materials are added to the planar areas and curved areas of the negative electrode plate of the battery, so that the negative electrode active material layer of at least one of the planar areas comprises an active material A, and the negative electrode active material layer of at least one of the curved areas comprises an active material B, and the expansion rate of the active material B is greater than that of the active material A. With the addition of the active material A and the active material B, the distance between the positive and negative electrode plates in the curved areas of the battery can be shortened after charging, which can effectively avoid the phenomenon that lithium ions tend to receive electrons on the surface of the negative electrode due to too long diffusion distance of lithium ions in the curved areas in the battery made by the traditional winding process, resulting in lithium precipitation and failure to be normally intercalated into the negative electrode active material.

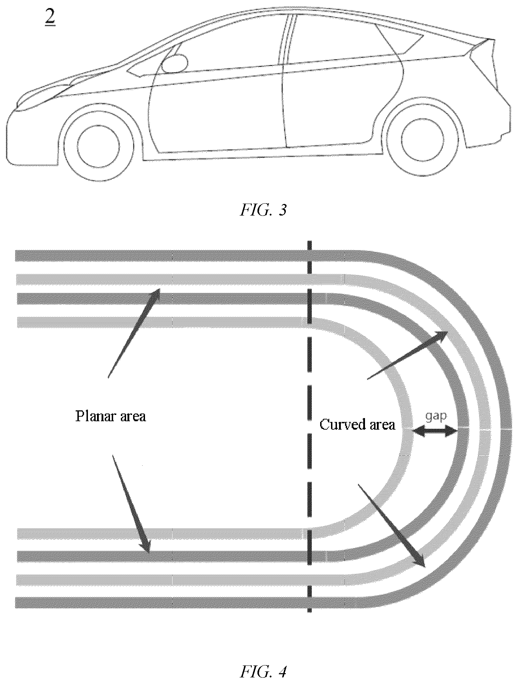

In present application, "curved areas" refers to the part of the electrode plate that is located at the corner of the battery and has a non-zero curvature; "Planar areas" is the areas of the electrode plate other than the "curved areas". It can be understood that since the battery needs to be placed in the housing, the electrode plate needs to be wound, and the winding will cause bending and deformation in some areas of the electrode plate. These areas that are bent and deformed and have a certain curvature are the "curved areas" mentioned in the present application, which can be judged by referring to the "curved areas" marked in the schematic diagram of the cross section of the battery (Fig. 4).

In some embodiments, the active material B includes a silicon-based material; optionally, the silicon-based material includes one or more of elemental silicon, a silicon oxide compound, a silicon carbon composite, a silicon nitrogen composite, and a silicon alloy; and optionally, the silicon-based material includes one or more of a silicon oxide compound and a silicon carbon composite. A suitable type of silicon-based material has a more appropriate expansion coefficient, which can help control the expansion degree of the curved areas within a more appropriate range.

In some embodiments, in the negative electrode active material layer located in the curved areas, the mass percentage content of the silicon-based material is 3% - 40%; and optionally, in the negative electrode active material layer located in the curved areas, the mass percentage content of the silicon-based material may be, for example 5%, 10%, 15%, 20%, 25%, 30% or 35%, and may also be, for example 5% - 20%. By controlling the mass proportion of the silicon-based material in the active material layer in the curved areas within an appropriate range, and on the premise of effectively reducing the diffusion distance of lithium ions, it is possible to avoid the excessive expansion and extrusion of the electrode plates caused by the short distance between the positive and negative electrode plates, or the lithium precipitation caused by poor infiltration of electrolyte solution, and further slow down the lithium precipitation of the battery.

In some embodiments, the negative electrode active material layer comprising the active material B in the curved areas also comprises a carbon-based material; optionally, in the negative electrode active material layer located in the curved areas, the mass percentage content of the carbon-based material is 55% - 97%; and further optionally, in the negative electrode active material layer located in the curved areas, the mass percentage content of the carbon-based material is 75% - 90%. In the negative electrode active material layer located in the curved areas, the mass percentage content of the carbon-based material may also be, for example 60%, 65%, 70%, 75%, 80%, 85%, 90% or 95%. By setting the mass proportion of the carbon-based material in the negative electrode active material layer containing the active material B in the curved areas within an appropriate range and compounding with an amount of the silicon-based material, the expansion degree of the curved areas can be further controlled within an appropriate range, and the capacity, initial efficiency and cycling performance of the battery can be effectively balanced.

In some embodiments, the carbon-based material includes one or more of synthetic graphite, natural graphite, soft carbon and hard carbon.

In some embodiments, optionally, in a fully discharged state, the shortest distance between the negative electrode plate located in the curved areas and the adjacent positive electrode plate (denoted as gap, reference can made to FIG. 4 ) is 18 µm - 170 µm; and optionally, in a fully discharged state, the shortest distance between the negative electrode plate located in the curved areas and the adjacent positive electrode plate may be, for example, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 135 µm, 140 µm, 145 µm, 150 µm, 155 µm, 160 µm or 165 µm, and may also be, for example, 20 µm - 120 µm. By controlling the initial distance between the positive and negative electrode plates in the curved areas of the battery in a fully discharged state within an appropriate range, the distance between the electrode plates of the battery after charging can be within an appropriate range, and on the premise of reducing the diffusion distance of lithium ions, the excessive extrusion and poor infiltration of electrolyte solution caused by too short a distance between the positive and negative electrode plates.

In some embodiments, after the secondary battery is charged to 4.25 V at a current of 0.5 C, the shortest distance between the negative electrode plate located in the curved areas and the adjacent positive electrode plate is 15 µm - 62 µm; or after the secondary battery is charged to 4.25 V at a current of 1 C, the shortest distance between the negative electrode plate located in the curved areas and the adjacent positive electrode plate is 15 µm - 59 µm; or after the secondary battery is charged to 4.25 V at a current of 2 C, the shortest distance between the negative electrode plate located in the curved areas and the adjacent positive electrode plate is 15 µm - 54 µm; or after the secondary battery is charged to 4.25 V at a current of 3 C, the shortest distance between the negative electrode plate located in the curved areas and the adjacent positive electrode plate is 15 µm - 45 µm; or after the secondary battery is charged to 4.25 V at a current of 4 C, the shortest distance between the negative electrode plate located in the curved areas and the adjacent positive electrode plate is 15 µm - 33 µm. After charging under more conventional charging conditions, by controlling the distance between the positive and negative electrode plates within an appropriate range, the occurrence of lithium precipitation can be further slowed down. Optionally, after the secondary battery is charged to 4.25 V at a current of 0.5 C, the shortest distance between the negative electrode plate located in the curved areas and the adjacent positive electrode plate is 15 µm, 20 µm, 25 µm, 30 µm, 35 µm, 40 µm, 45 µm, 50 µm, 55 µm, 60 µm, etc. After the secondary battery is charged to 4.25 V at a current of 1 C, the shortest distance between the negative electrode plate located in the curved areas and the adjacent positive electrode plate is 15 µm, 20 µm, 25 µm, 30 µm, 35 µm, 40 µm, 45 µm, 50 µm, 55 µm, etc. After the secondary battery is charged to 4.25 V at a current of 2 C, the shortest distance between the negative electrode plate located in the curved areas and the adjacent positive electrode plate is 15 µm, 20 µm, 25 µm, 30 µm, 35 µm, 40 µm, 45 µm, 50 µm, etc. After the secondary battery is charged to 4.25 V at a current of 3 C, the shortest distance between the negative electrode plate located in the curved areas and the adjacent positive electrode plate is 15 µm, 20 µm, 25 µm, 30 µm, 35 µm, 40 µm, 45 µm, etc. After the secondary battery is charged to 4.25 V at a current of 4 C, the shortest distance between the negative electrode plate located in the curved areas and the adjacent positive electrode plate is 15 µm, 20 µm, 25 µm, 30 µm, etc.

In some embodiments, the negative electrode active material layer in the planar areas does not comprise a silicon-based material. Since the planar areas needs to be pressed after winding, the introduction of silicon-based materials in the planar areas is avoided, which can slow down the mutual extrusion of the positive and negative electrode plates in the planar areas after charging and prevent poor infiltration of electrolyte solution.

In some embodiments, the active material A comprises a silicon-based material, and the mass percentage content of the silicon-based material in the negative electrode active material layer located in the curved areas is greater than that in the negative electrode active material layer located in the planar areas.

In some embodiments, on the surface of the negative electrode current collector, the negative electrode active material layer has an areal density of 80 mg/1540.25 mm² - 190 mg/1540.25 mm²; and optionally, on the surface of the negative electrode current collector, the areal density of the negative electrode active material layer may also be, for example, 85 mg/1540.25 mm², 90 mg/1540.25 mm², 95 mg/1540.25 mm², 100 mg/1540.25 mm², 105 mg/1540.25 mm², 110 mg/1540.25 mm², 115 mg/1540.25 mm², 120 mg/1540.25 mm², 125 mg/1540.25 mm², 130 mg/1540.25 mm², 135 mg/1540.25 mm², 140 mg/1540.25 mm², 145 mg/1540.25 mm², 150 mg/1540.25 mm², 155 mg/1540.25 mm², 160 mg/1540.25 mm², 165 mg/1540.25 mm², 170 mg/1540.25 mm², 175 mg/1540.25 mm², 180 mg/1540.25 mm² or 185 mg/1540.25 mm², and may also be, for example 115 mg/1540.25 mm² - 160 mg/1540.25 mm². By controlling the areal density of the active material layer within an appropriate range, the energy density and kinetic performance of the battery can be effectively balanced on the premise of slowing down lithium precipitation.

In some embodiments, the negative electrode active material layer has a thickness of 65 µm - 140 µm; and optionally, the thickness of the negative electrode active material layer may also be, for example, 70 µm, 75 µm, 80 µm, 85 µm, 90 µm, 95 µm, 100 µm, 105 µm, 110 µm, 115 µm, 120 µm, 125 µm, 130 µm or 135 µm, and may also be, for example 90 µm - 110 µm. By controlling the thickness of the negative electrode active material layer within an appropriate range, it can better match the distance between the positive and negative electrode plates set in the foregoing embodiments, so that lithium ions can be intercalated into the negative electrode active material timely, and the occurrence of lithium precipitation is further slowed down.

In some embodiments, the negative electrode plate has a thickness of 70 µm - 145 µm; and optionally, the thickness of the negative electrode plate may be, for example, 75 µm, 80 µm, 85 µm, 90 µm, 95 µm, 100 µm, 105 µm, 110 µm, 115 µm, 120 µm, 125 µm, 130 µm, 135 µm or 140 µm, and may also be, for example 95 µm - 115 µm. By controlling the thickness of the negative electrode plate within an appropriate range, the battery is allowed to have more suitable mechanical strength and better match the conventional processing technology, so that it is easy to control the distance between the positive and negative electrode plates within the range set in the foregoing embodiments, and further slow down the occurrence of lithium precipitation.

A second aspect of the present application provides a method for preparing the secondary battery of one or more of the foregoing embodiments, comprising the steps of:
determining the planar areas and the curved areas of a negative electrode plate according to a winding process, coating a negative electrode slurry containing an active material B on the surface of a negative electrode current collector corresponding to at least one of the curved areas, drying and pressing same to obtain a negative electrode plate;
coating a positive electrode slurry on the surface of a positive electrode current collector, drying and pressing same to obtain a positive electrode plate; and
winding the negative electrode plate, the positive electrode plate and a separator according to a preset winding process.

In some embodiments, the negative electrode slurry containing the active material B has a solid content of 42% - 60%; and optionally, the solid content of the negative electrode slurry containing the active material B may be, for example44%, 46%, 48%, 50%, 52%, 54%, 56% or 58%, and may also be, for example 44% - 56%. By controlling the solid content of the negative electrode slurry within an appropriate range, it is beneficial to obtain a more uniform coating of the negative electrode active material layer, so that the distribution of the active material in the curved areas is more uniform, and the occurrence of lithium precipitation can be better slowed down.

A third aspect of the present application provides a power consuming device, comprising the secondary battery of one or more of the foregoing embodiments.

In addition, the secondary battery and the power consuming device of the present application will be described below with reference to the drawings as appropriate.

In an embodiment of the present application, a secondary battery is provided.

Typically, a secondary battery comprises a positive electrode plate, a negative electrode plate, an electrolyte and a separator. During the charge/discharge of the battery, active ions are intercalated and deintercalated back and forth between a positive electrode plate and a negative electrode plate. The electrolyte functions to conduct ions between the positive electrode plate and the negative electrode plate. The separator is provided between the positive electrode plate and the negative electrode plate and mainly functions to prevent the positive and negative electrodes from short-circuiting while enabling ions to pass through.

### Positive electrode plate

The positive electrode plate comprises a positive electrode current collector and a positive electrode film layer provided on at least one surface of the positive electrode current collector, the positive electrode film layer comprising a positive electrode active material.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), lithium nickel cobalt aluminum oxide (e.g., LiNi_{0.85}Co_{0.15}Al_{0.05}O₂), and modified compounds thereof, etc. Examples of lithium-containing phosphates of olivine structure may include, but are not limited to, at least one of lithium iron phosphate (e.g., LiFePO₄ (also referred to as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

### Negative electrode plate

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material may comprise at least one of the following materials: synthetic graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites, and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from at least one of superconductive carbon, acetylene black, carbon black, Ketjen black, carbon dots, carbon nanotubes, graphene, and carbon nanofibers.

In some embodiments, the negative electrode film layer may optionally comprise other auxiliary agents, such as thickener (e.g., odium carboxymethyl cellulose (CMC-Na)), etc.

In some embodiments, the negative electrode plate can be prepared as follows: dispersing the above-mentioned components for preparing the negative electrode plate, such as negative electrode active material, conductive agent, binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

### Electrolyte

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### Separator

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

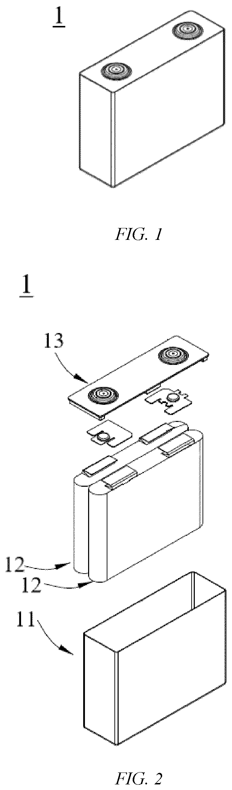

The shape of the secondary battery is not particularly limited in the present application and may be cylindrical, square or of any other shape. For example, Fig. 1 shows a secondary battery 1 with a square structure as an example.

In some embodiments, with reference to Fig. 2, the outer package may include a housing 11 and a cover plate 13. Herein, the housing 11 may comprise a bottom plate and side plates connected to the bottom plate, and the bottom plate and the side plates enclose to form an accommodating cavity. The housing 11 has an opening in communication with the accommodating cavity, and the cover plate 13 may cover the opening to close the accommodating cavity. The positive electrode plate, the negative electrode plate, and the separator may be subjected to a winding process or a laminating process to form an electrode assembly 12. The electrode assembly 12 is encapsulated in the accommodating cavity. The electrolyte solution infiltrates the electrode assembly 12. The number of the electrode assemblies 12 contained in the secondary battery 1 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

In some embodiments, the above battery module may also be assembled into a battery pack, the number of the battery modules contained in the battery pack may be one or more, and the specific number can be selected by those skilled in the art according to the application and capacity of the battery pack.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device, an electric vehicle, an electric train, ship, and satellite, an energy storage system, etc., but is not limited thereto. wherein the mobile equipment may be, for example, a mobile phone, a laptop computer, etc.; the electric vehicle may be, for example, a pure electric vehicle, a hybrid electric vehicle, a plug-in hybrid electric vehicle, an electric bicycle, an electric scooter, an electric golf cart, an electric truck, etc., but is not limited thereto.

As for the power consuming device, the secondary battery, battery module or battery pack can be selected according to the usage requirements thereof.

Fig. 3 shows a power consuming device 2 as an example. The power consuming device may be a pure electric vehicle, a hybrid electric vehicle, a plug-in hybrid electric vehicle, etc.

As another example, the device may be a mobile phone, a tablet computer, a laptop computer, etc.

### Example 1

(1) Preparation of positive electrode plate
   A positive electrode active material of ternary material NCM811, a conductive agent of acetylene black and a binder of polyvinylidene fluoride (PVDF) in a mass ratio of 97 : 2 : 1 were added into N-methylpyrrolidone, and uniformly stirred to obtain a positive electrode slurry; the positive electrode slurry was uniformly coated onto a 15 µm thick aluminum foil; followed by drying, cold pressing, die-cutting and slitting to prepare a positive electrode plate of lithium-ion batteries;
(2) Preparation of negative electrode plate
   a. a negative electrode active material of synthetic graphite, conductive carbon Super P, a thickener (CMC) and a binder (SBR) in a mass ratio of 95 : 3 : 1 : 1 were added into water, and uniformly stirred to obtain a common negative electrode slurry with a solid content of 50%;
   b. a negative electrode active material of synthetic graphite, a silicon-oxygen material (including at least SiOₓ, where 0 < x < 2), conductive carbon Super P, a thickener (CMC) and a binder (SBR) in a mass ratio of 75 : 20 : 3 : 1 : 1 were added into water, and uniformly stirred to obtain a high expansion negative electrode slurry with a solid content of 50%;
   c. a 6 µm thick copper foil was taken as the negative electrode current collector, the planar areas and the curved areas were divided according to the winding process of the battery, the common negative electrode slurry prepared in step a was coated onto the planar areas, and the high expansion negative electrode slurry prepared in step b was coated onto the curved areas, followed by drying, cold pressing, die-cutting and slitting to prepare a negative electrode plate of lithium-ion batteries, wherein in the obtained negative electrode plate, the areal density of the negative electrode active material layer is 140 mg/1540.25 mm², the thickness of the negative electrode active material layer is 101 µm, and the thickness of the negative electrode plate is 106 µm;
(3) Preparation of separator
   Polyethylene was used as a base film, and the base film was coated with 3 µm thick aluminum oxide to obtain the separator;
(4) Preparation of electrolyte solution
   Lithium hexafluorophosphate was dissolved in a solvent of DMC : DEC : EC in a volume ratio of 1 : 1 : 1 to obtain an electrolyte solution of lithium ion battery;
(5) Preparation of lithium ion battery
   The above mentioned positive electrode plate, the negative electrode plate and the separator were wound to obtain an electrode assembly; wherein in the curved areas of the negative electrode plate, the distance between the adjacent positive electrode plate and the negative electrode plate (denoted as gap1) is 120 µm;
   the above mentioned electrode assembly was packaged, injected with an electrolyte solution, and formed to obtain a lithium ion battery.

### Example 2

Basically the same as example 1, except that in step (2) b, the high expansion negative electrode slurry has a formulation of: a negative electrode active material of synthetic graphite, a silicon-oxygen material (including at least SiOₓ, where 0 < x < 2), conductive carbon Super P, a thickener (CMC) and a binder (SBR) in a mass ratio of 92 : 3 : 3 : 1 : 1.

### Example 3

Basically the same as example 1, except that in step (2) b, the high expansion negative electrode slurry has a formulation of: a negative electrode active material of synthetic graphite, a silicon-oxygen material (including at least SiOₓ, where 0 < x < 2), conductive carbon Super P, a thickener (CMC) and a binder (SBR) in a mass ratio of 55 : 40 : 3 : 1 : 1.

### Example 4

Basically the same as example 1, except that the winding process was controlled so that in the curved areas of the negative electrode plate, the distance between the adjacent positive electrode plate and the negative electrode plate (denoted as gap1) was 18 µm.

### Example 5

Basically the same as example 1, except that the winding process was controlled so that in the curved areas of the negative electrode plate, the distance between the adjacent positive electrode plate and the negative electrode plate (denoted as gap1) was 170 µm.

### Example 6

Basically the same as example 1, except that when preparing the negative electrode plate, the planar areas and the curved areas were not distinguished, and both were coated with the high expansion negative electrode slurry prepared in step (2) b of example 1.

### Comparative example 1

Basically the same as example 1, the difference is that when preparing the negative electrode plate, the planar areas and the curved areas were not distinguished, and both were coated with the common negative electrode slurry prepared in step (2) a of example 1.

### Characterization and tests:

(1) Steps for testing areal density:
   A sample was placed on the platform of a standard punch (with an area of 1540.25 mm²), and the electrode plate was punched out and pressed down to obtain a small disc with an area of 1540.25 mm²;
   the above-mentioned small disc was weighted to obtain the areal density of the electrode plate.
(2) The lithium ion batteries prepared in each of the examples and comparative example were charged according to the following conditions:
   Test process: the battery was let to stand for 30 min, then charged to a voltage of 4.25 V at a rate of 0.5 C, further charged to a current of 0.05 C at a constant voltage of 4.25 V, and then let to stand for 5 min.
   After charging, in the curved areas of the negative electrode plate, the distance between the adjacent positive electrode plate and the negative electrode plate (denoted as gap2) was measured.
(3) Reversible capacity test:
   test process: the battery was let to stand for 30 min, then charged to a voltage of 4.25 V at a rate of 0.5 C, further charged to a current of 0.05 C at a constant voltage of 4.25 V, and then let to stand for 5 min, and then was discharged to a voltage of 2.5 V at a rate of 0.5 C. This is a charge and discharge cycle process. The discharge capacity was recorded at each cycle. The capacity retention rate (%) after n cycles = (the discharge capacity of the nth cycle/the discharge capacity of the initial cycle) × 100%.
(4) Judgment of lithium precipitation degree:
   after the battery is fully charged, it was disassembled and observed in an environment where the air humidity was lower than 2%, and the degree of lithium precipitation was determined by the color depth of lithium precipitated:
   Slight lithium precipitation: light gray;
   Moderate lithium precipitation: off-white;
   Severe lithium precipitation: Bright white.

The test results were listed in Table 1:

**Table 1**

| | Negative electrode active material layer curved areas | | Areal density of the negative electrode active material layer (mg/1540.25 mm²) | gap 1 (µm) Before chargin g | gap2 (µm) After chargi ng | Capacity retention rate after 10 cycles (%) | Lithium precipitation degree |
|---|---|---|---|---|---|---|---|
| | Proportion of carbon-based material (%) | Proportion of silicon-based material (%) | | | | | |
| Example 1 | 75 | 20 | 140 | 120 | 30 | 99.9 | No lithium precipitation |
| Example 2 | 92 | 3 | 140 | 120 | 90 | 99.7 | Slight lithium precipitation |
| Example 3 | 55 | 40 | 140 | 120 | 12 | 99.7 | Slight lithium precipitation |
| Example 4 | 75 | 20 | 140 | 18 | 9 | 99.4 | Slight lithium precipitation |
| Example 5 | 75 | 20 | 140 | 170 | 80 | 99.5 | Slight lithium precipitation |
| Example 6 | 75 | 20 | 140 | 120 | 30 | 99.4 | Slight lithium precipitation |
| Comparative example 1 | 100 | / | 140 | 120 | 98 | 99.1 | Severe lithium precipitation |

Analyzing the data in Table 1, it can be seen that compared with example 1, the proportion of silicon-based material in the curved areas in example 2 is relatively small, and after charging, the reduction of the gap in the curved areas is limited, and the migration path of lithium ions is still long, which will cause a slight lithium precipitation; in example 3, the content of the silicon base is relatively high, and the expansion of the electrode plate after charging is more seriously, which will also lead to a certain degree of lithium precipitation; in example 4, the original gap value before charging is relatively low, after charging, the electrode plate was swelled, and the gap was further reduced, resulting in a certain degree of lithium precipitation, and the capacity retention rate decreased greatly; in example 5, the original gap value before charging is relatively large, resulting in the gap not being reduced to a more suitable range after charging, so there is also a certain degree of lithium precipitation; in example 6, the planar area was also coated with the high-expansion slurry, and the overall expansion of the electrode plate is more after charging, which will also lead to a certain degree of lithium precipitation; in comparative example 1, since the silicon-based material is not introduced into the curved areas, the gap value is still large after charging, and because the carbon-based material has a low capacity, lithium precipitation is serious in the battery, and the capacity retention rate decreased significantly.

The various technical features of the above embodiments can be combined in any manner, and in order to simplify the description, not all possible combinations of the various technical features of the above embodiments are described. However, the technical features should be considered to be within the scope of the description in the specification, as long as there is no conflict between the combinations of the technical features.

The embodiments described above merely illustrate several implementations of the present application and are described relatively specifically and in detail, but should not be construed as limiting the patent scope. It should be noted that several variations and improvements may also be made by those of ordinary skill in the art without departing from the concept of the present application, and should fall within the scope of protection of the present application. Therefore, the scope of protection of the present application shall be subject to the appended claims.

## Claims

1. A secondary battery, comprising a positive electrode plate, a negative electrode plate and a separator provided between the positive electrode plate and the negative electrode plate;
wherein the negative electrode plate comprises a negative electrode current collector and a negative electrode active material layer provided on at least one surface of the negative electrode current collector, the negative electrode plate comprises one or more planar areas and one or more curved areas, the negative electrode active material layer of at least one of the planar areas comprises an active material A, and the negative electrode active material layer of at least one of the curved areas comprises an active material B, and the expansion rate of the active material B is greater than that of the active material A.

2. The secondary battery according to claim 1, **characterized in that** the active material B includes a silicon-based material; optionally, the silicon-based material includes one or more of elemental silicon, a silicon oxide compound, a silicon carbon composite, a silicon nitrogen composite, and a silicon alloy; and optionally, the silicon-based material includes one or more of a silicon oxide compound and a silicon carbon composite.

3. The secondary battery according to claim 2, **characterized in that** in the negative electrode active material layer located in the curved areas, the mass percentage content of the silicon-based material is 3% - 40%; and optionally, in the negative electrode active material layer located in the curved areas, the mass percentage content of the silicon-based material is 5% - 20%.

4. The secondary battery according to any one of claims 1-3, **characterized in that** the negative electrode active material layer comprising the active material B in the curved areas also comprises a carbon-based material; optionally, in the negative electrode active material layer located in the curved areas, the mass percentage content of the carbon-based material is 55% - 97%; and further optionally, in the negative electrode active material layer located in the curved areas, the mass percentage content of the carbon-based material is 75% - 90%.

5. The secondary battery according to claim 4, **characterized in that** the carbon-based material includes one or more of synthetic graphite, natural graphite, soft carbon and hard carbon.

6. The secondary battery according to any one of claims 1-5, **characterized in that** in a fully discharged state, the shortest distance between the negative electrode plate located in the curved areas and the adjacent positive electrode plate is 18 µm - 170 µm; and optionally, in a fully discharged state, the shortest distance between the negative electrode plate located in the curved areas and the adjacent positive electrode plate is 20 µm - 120 µm.

7. The secondary battery according to any one of claims 1-6, **characterized in that**
after the secondary battery is charged to 4.25 V at a current of 0.5 C, the shortest distance between the negative electrode plate located in the curved areas and the adjacent positive electrode plate is 15 µm - 62 µm; or,
after the secondary battery is charged to 4.25 V at a current of 1 C, the shortest distance between the negative electrode plate located in the curved areas and the adjacent positive electrode plate is 15 µm - 59 µm; or,
after the secondary battery is charged to 4.25 V at a current of 2 C, the shortest distance between the negative electrode plate located in the curved areas and the adjacent positive electrode plate is 15 µm - 54 µm; or,
after the secondary battery is charged to 4.25 V at a current of 3 C, the shortest distance between the negative electrode plate located in the curved areas and the adjacent positive electrode plate is 15 µm - 45 µm; or,
after the secondary battery is charged to 4.25 V at a current of 4 C, the shortest distance between the negative electrode plate located in the curved areas and the adjacent positive electrode plate is 15 µm - 33 µm.

8. The secondary battery according to any one of claims 2-7, **characterized in that** the active material A comprises a silicon-based material, and the mass percentage content of the silicon-based material in the negative electrode active material layer located in the curved areas is greater than that in the negative electrode active material layer located in the planar areas.

9. The secondary battery according to any one of claims 1-8, **characterized in that** on the surface of the negative electrode current collector, the negative electrode active material layer has an areal density of 80 mg/1540.25 mm² - 190 mg/1540.25 mm²; and optionally, on the surface of the negative electrode current collector, the negative electrode active material layer has an areal density of 115 mg/1540.25 mm² - 160 mg/1540.25 mm².

10. The secondary battery according to any one of claims 1-9, **characterized in that** the negative electrode active material layer has a thickness of 65 µm - 140 µm; and optionally, the negative electrode active material layer has a thickness of 90 µm - 110 µm.

11. The secondary battery according to any one of claims 1-10, **characterized in that** the negative electrode plate has a thickness of 70 µm - 145 µm; and optionally, the negative electrode plate has a thickness of 95 µm - 115 µm.

12. A method for preparing a secondary battery according to any one of claims 1-11, comprising the steps of:
determining the planar areas and the curved areas of a negative electrode plate according to a winding process, coating a negative electrode slurry containing an active material B on the surface of a negative electrode current collector corresponding to at least one of the curved areas, drying and pressing same to obtain a negative electrode plate;
coating a positive electrode slurry on the surface of a positive electrode current collector, drying and pressing same to obtain a positive electrode plate; and
winding the negative electrode plate, the positive electrode plate and a separator according to a preset winding process.

13. The preparation method according to claim 12, **characterized in that** the negative electrode slurry containing the active material B has a solid content of 42% - 60%; and optionally, the negative electrode slurry containing the active material B has a solid content of 44% - 56%.

14. A power consuming device, comprising a secondary battery according to any one of claims 1-11.
